# EUROPEAN PATENT APPLICATION

(11) **EP 4 672 668 A1**
(43) Date of publication of application: **31.12.2025**
(21) Application number: 25185409.7
(22) Date of filing: 26.06.2025
(51) Int. Cl.: H04L 9/08, H04L 9/00

(54) **PRIVATE KEY RECOVERY SYSTEM, PRIVATE KEY RECOVERY METHOD, AND PROGRAM**

(30) Priority: 28.06.2024 JP 2024104526
(71) Applicant: Rakuten Group, Inc., Setagaya-ku Tokyo 158-0094 (JP)
(72) Inventor: KATSUTANI, Yuta, 107-0062, Minato-ku, Tokyo (JP)
(74) Representative: Hoffmann Eitle

(57) **Abstract**

A first recovery key acquisition module (302) of a private key recovery system (1) acquires a first recovery key managed by a first service in which a first private key stored in a user terminal of a user is used. A second recovery key acquisition module (303) acquires a second recovery key managed by a second service different from the first service. A private key recovery module (304) recovers the first private key based on the first recovery key and the second recovery key.

## Description

### BACKGROUND OF THE INVENTION

### Field of the Invention

The present disclosure relates to a private key recovery system, a private key recovery method, and a program.

### Description of the Related Art

Hitherto, there has been known a service which uses a private key stored in a user terminal. For example, in Japanese Patent Application Laid-open No. 2020-177377, there is described a crypto asset service in which, when a user remits a crypto asset from a predetermined account address, a signature is generated for a remittance of the crypto asset by using a first private key associated with the predetermined account address, and a further signature is generated for the remittance of the crypto asset by using a second private key associated with the predetermined account address.

### SUMMARY OF THE INVENTION

However, in Japanese Patent Application Laid-open No. 2020-177377, measures to be taken when a user loses a private key are not described. For example, when a user is required to contact a call center of the crypto asset service in order to recover the lost private key, the user is required to spend time and effort, which reduces convenience of the user. This point is not limited to crypto asset services. The same applies to other services that use a private key stored in a user terminal. Related-art technologies have not been able to sufficiently increase convenience of the user.

One object of the present disclosure is to increase convenience of a user.

According to at least one embodiment of the present disclosure, there is provided a private key recovery system including: a first recovery key acquisition module configured to acquire a first recovery key managed by a first service in which a first private key stored in a user terminal of a user is used; a second recovery key acquisition module configured to acquire a second recovery key managed by a second service different from the first service; and a private key recovery module configured to recover the first private key based on the first recovery key and the second recovery key.

According to the present disclosure, it is possible to increase the convenience of the user.

### BRIEF DESCRIPTION OF THE DRAWINGS

FIG. 1 is a diagram for illustrating an example of a hardware configuration of a private key recovery system.
FIG. 2 is a view for illustrating an example of screens displayed during use registration of a first service.
FIG. 3 is a diagram for illustrating an example of signing by using a first private key and a second private key.
FIG. 4 is a diagram for illustrating an example of a flow during recovery of the first private key.
FIG. 5 is a view for illustrating an example of screens displayed during recovery of the first private key.
FIG. 6 is a diagram for illustrating an example of functions implemented in the private key recovery system.
FIG. 7 is a table for showing an example of a first database.
FIG. 8 is a table for showing an example of a second database.
FIG. 9 is a flow chart for illustrating an example of use processing executed in the private key recovery system.
FIG. 10 is a flow chart for illustrating the example of the use processing executed in the private key recovery system.
FIG. 11 is a diagram for illustrating an example of functions implemented in modification examples.
FIG. 12 is a view for illustrating an example of screens displayed on a user terminal in Modification Example 1.
FIG. 13 is a view for illustrating an example of screens displayed on a user terminal in Modification Example 3.

### DESCRIPTION OF THE EMBODIMENTS

### [1. Hardware Configuration of Private Key Recovery System]

An example of a private key recovery system, a private key recovery method, and a program according to at least one embodiment of the present disclosure is described.

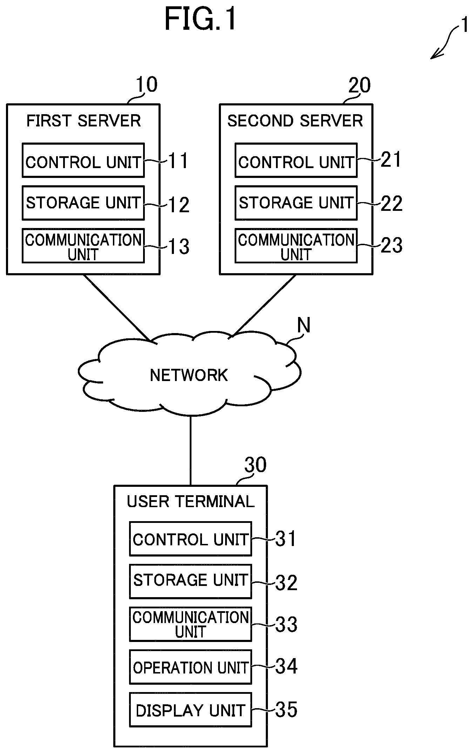

FIG. 1 is a diagram for illustrating an example of a hardware configuration of the private key recovery system. For example, a private key recovery system 1 includes a first server 10, a second server 20, and a user terminal 30. The first server 10, the second server 20, and the user terminal 30 are each connected to a network N such as the Internet or a LAN. In FIG. 1, one each of the first server 10, the second server 20, and the user terminal 30 is illustrated, but there may be a plurality of at least one of the first server 10, the second server 20, or the user terminal 30.

The first server 10 is a server computer of a first service. In the at least one embodiment, a case in which a crypto asset service which receives crypto asset transactions by users corresponds to the first service is taken as an example. The first service may be any service that is used by users. The first service is not limited to a crypto asset service. For example, the first service may be another financial service other than a crypto asset service (for example, a financial service provided by a bank or a securities company), an electronic commerce service, a travel reservation service, a communication service, an online flea market service, or any other service.

For example, the first server 10 includes a control unit 11, a storage unit 12, and a communication unit 13. The control unit 11 includes at least one processor. The storage unit 12 includes at least one of a volatile memory such as a RAM, or a non-volatile memory such as a flash memory. The communication unit 13 includes at least one of a communication interface for wired communication or a communication interface for wireless communication.

The second server 20 is a server computer of a second service. In the at least one embodiment, a case in which a cloud service that manages user data in the cloud (for example, a backup service that backs up data in a storage other than the user terminal 30) corresponds to the second service is taken as an example. The second service may be any service different from the first service. The second service is not limited to a cloud service. For example, the second service may be an email service, a search service, a video distribution service, a social networking service (SNS), a news distribution service, or another service. In the at least one embodiment, a case in which an operator of the first service and an operator of the second service are different from each other is taken as an example, but the operator of the first service and the operator of the second service may be the same as each other.

For example, the second server 20 includes a control unit 21, a storage unit 22, and a communication unit 23. Hardware configurations of the control unit 21, the storage unit 22, and the communication unit 23 may be the same as those of the control unit 11, the storage unit 12, and the communication unit 13, respectively.

The user terminal 30 is a computer of a user. For example, the user terminal 30 is a smartphone, a tablet computer, a personal computer, or a wearable terminal. The user terminal 30 includes a control unit 31, a storage unit 32, a communication unit 33, an operation unit 34, and a display unit 35. Hardware configurations of the control unit 31, the storage unit 32, and the communication unit 33 may be the same as those of the control unit 11, the storage unit 12, and the communication unit 13, respectively. The operation unit 34 is an input device such as a touch panel or a mouse. The display unit 35 is a display such as a liquid crystal display or an organic EL display.

Programs stored in the storage units 12, 22, and 32 may be supplied to the first server 10, the second server 20, or the user terminal 30 via the network N. Further, the first server 10, the second server 20, or the user terminal 30 may include at least one of a reading unit for reading a computer-readable information storage medium (for example, a memory card slot) or an input/output unit (for example, a USB port) through which data is input from or output to an external device. For example, the program stored on the information storage medium may be supplied to the first server 10, the second server 20, or the user terminal 30 via the at least one of the reading unit or the input/output unit.

Moreover, the private key recovery system 1 is only required to include at least one computer. The computers included in the private key recovery system 1 are not limited to the example of FIG. 1. For example, the private key recovery system 1 may include only the first server 10 and the user terminal 30. In this case, the second server 20 is present outside the private key recovery system 1. The private key recovery system 1 may include only the first server 10. In this case, the second server 20 and the user terminal 30 are present outside the private key recovery system 1. The private key recovery system 1 may include only the user terminal 30. In this case, the first server 10 and the second server 20 are present outside the private key recovery system 1. For example, the private key recovery system 1 may include another computer not shown in FIG. 1.

### [2. Overview of Private Key Recovery System]

In the at least one embodiment, the user operates the user terminal 30 to use the first service. For example, a first app which is an application for the first service is installed on the user terminal 30. The first app may be an app developed for using a blockchain technology called Web3. The user uses the first service from the first app. When the user has not completed use registration of the first service, the user performs use registration of the first service from the first app. The user may complete use registration of the first service from a browser, and not from the first app. The user may use the first service from the browser.

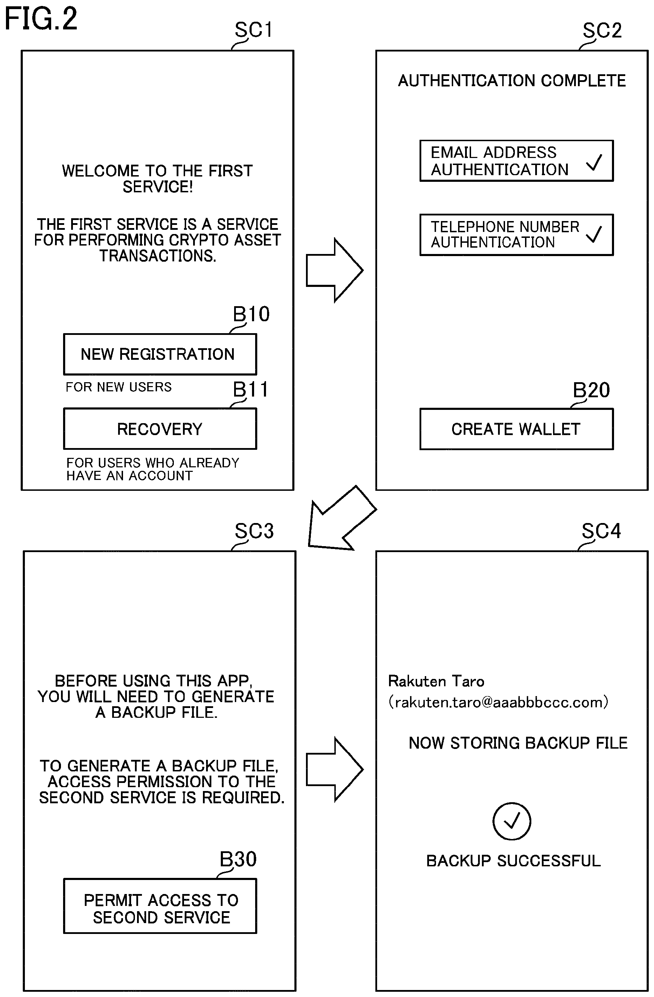

FIG. 2 is a view for illustrating an example of screens displayed during use registration of the first service. For example, when the user starts the first app, as illustrated in the upper left of FIG. 2, the user terminal 30 displays, on the display unit 35, a use registration screen SC1 for receiving a procedure for use registration of the first service. The use registration screen SC1 includes a button B10 for a user who has not completed use registration of the first service to perform use registration of the first service, and a button B11 for a user who has completed use registration of the first service to recover a first private key, which is described later.

For example, when the user selects the button B10, the procedure for use registration of the first service is started. A flow of use registration of the first service may be the same as the flow of a publicly-known first service. In the at least one embodiment, during use registration of the first service, email address authentication for checking the validity of an email address and telephone number authentication for checking the validity of a telephone number are performed. When those types of authentication are completed, as illustrated in the upper right of FIG. 2, the user terminal 30 displays, on the display unit 35, an authentication completion screen SC2 indicating that those types of authentication have been completed.

For example, the authentication completion screen SC2 includes a button B20 for the user to create a wallet. A wallet is a tool for managing crypto assets. The wallet may be physical hardware, or may be data such as a program or a database. The first app or other data stored in the user terminal 30 may correspond to the wallet, or data stored in the first server 10 may correspond to the wallet. The meaning of "wallet" may be the same as that in a publicly-known first service.

In the at least one embodiment, before creating a wallet and using the first app, the user may be required to generate a backup file that is a backup of the data used in the first service. An example of the specific content of the backup file is described later. For example, the backup file is not stored in the first server 10 or the user terminal 30, but is stored in the second server 20. When the user selects the button B20, as illustrated in the lower left of FIG. 2, the user terminal 30 displays, on the display unit 35, a generation screen SC3 for generating a backup file.

For example, the generation screen SC3 includes a button B30 which permits the user to access the second service. When the user selects the button B30, the user selects or inputs a second user account, which is an account of the user for the second service. The second server 20 performs second authentication, which is authentication for checking the validity of the second user account. When the validity of the second user account is confirmed, the second server 20 works together with the first server 10 and the user terminal 30 to store the backup file in a storage area associated with the second user account.

For example, when storing of the backup file is complete, as illustrated in the lower right of FIG. 2, the user terminal 30 displays, on the display unit 35, a backup completion screen SC4 indicating that storing of the backup file is complete. When storing of the backup file is complete, use registration of the first service is completed. The user can send and receive crypto assets that he or she owns by operating the first app.

In the at least one embodiment, the first private key and the second private key required for transactions in the first service are generated during use registration of the first service. The user terminal 30 stores the first private key. The first server 10 and the second server 20 do not store the first private key. The first server 10 stores the second private key. The second server 20 and the user terminal 30 do not store the second private key. The first private key and the second private key are managed in a distributed manner by the user terminal 30 and the first server 10. For example, when the user performs a crypto asset transaction from the first app, transaction information relating to the transaction by the user is signed by using the first private key and the second private key.

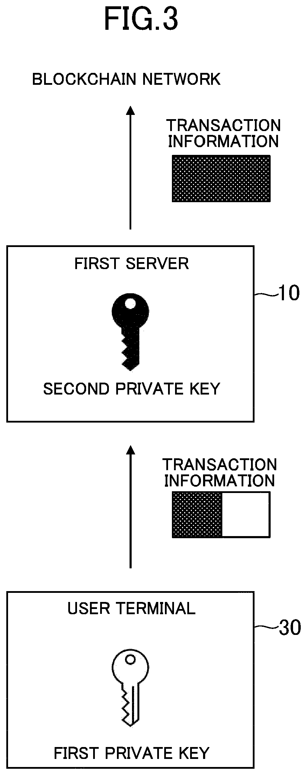

FIG. 3 is a diagram for illustrating an example of signing by using the first private key and the second private key. As illustrated in FIG. 3, when the user performs a crypto asset transaction from the first app, the user terminal 30 signs a portion of the transaction information by using the first private key. In the example of FIG. 3, the signed portion of the transaction information is indicated by halftone dots. The user terminal 30 transmits the transaction information, a portion of which is signed by using the first private key, to the first server 10. The first server 10 uses the second private key to sign the portion of the transaction information received from the user terminal 30 that has not been signed by using the first private key.

For example, the first server 10 transmits the transaction information signed by using the first private key and the second private key to a blockchain network (part of the network N). The flow of processing the transaction information transmitted to the blockchain network may be the same as that of a publicly-known first service. For example, after the validity of the signatures of the transaction information is verified, the transaction designated by the user is performed. Thus, in the at least one embodiment, a case in which the user terminal 30 is required to store the first private key in order for the user to perform a transaction from the first app is taken as an example.

For example, the user may for some reason lose the first private key. There may be a case in which the user changes the model of the user terminal 30, and the user loses the first private key because the first private key is not stored in the user terminal 30 after the model change. There may be a case in which the user loses the first private key because the user has deleted the first app. There may be a case in which the user loses the first private key because a failure has occurred in the storage unit 32. When the user loses the first private key, the user is not able to perform a transaction from the first app. Thus, in the at least one embodiment, the user is able to recover the first private key from the first app.

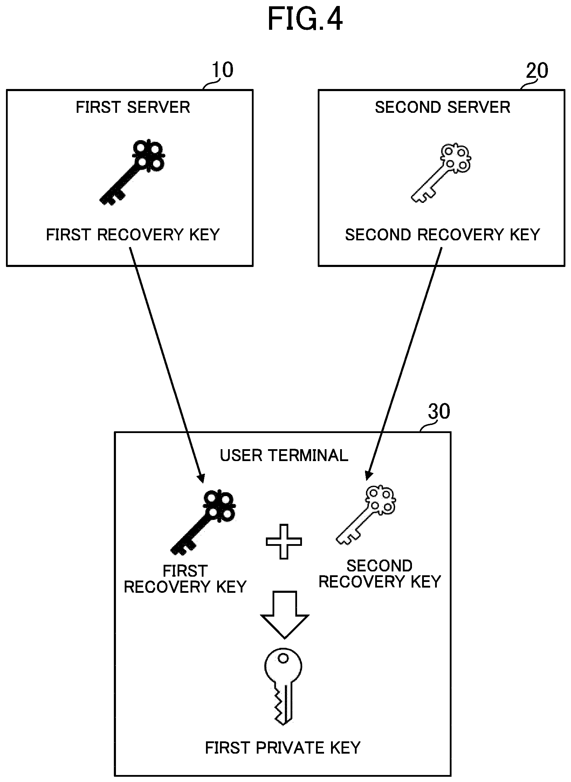

FIG. 4 is a diagram for illustrating an example of a flow during recovery of the first private key. As illustrated in FIG. 4, during use registration of the first service, a first recovery key and a second recovery key to be used in recovery of the first private key are generated. The first server 10 stores the first recovery key. The second server 20 and the user terminal 30 do not store the first recovery key. The second server 20 stores the second recovery key. The first server 10 and the user terminal 30 do not store the second recovery key. The above-mentioned backup file includes the second recovery key. The user terminal 30 acquires the first recovery key from the first server 10, and acquires the second recovery key from the second server 20. The user terminal 30 recovers the first private key based on the first recovery key and the second recovery key.

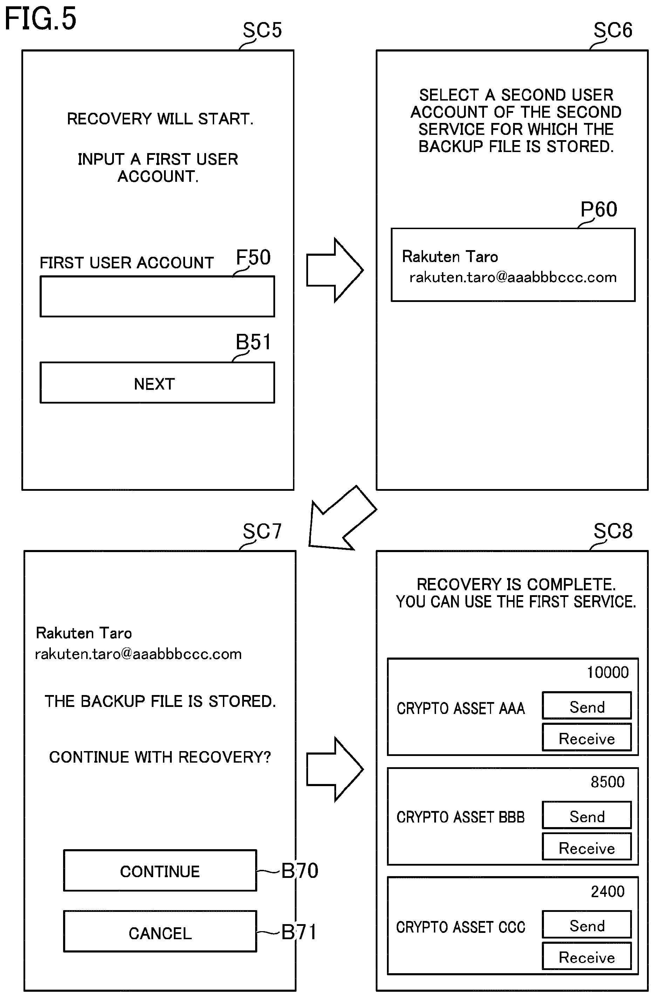

FIG. 5 is a view for illustrating an example of screens displayed during recovery of the first private key. For example, when the user loses the first private key, the user terminal 30 displays the use registration screen SC1 of the upper left of FIG. 2 on the display unit 35. When the user selects the button B11, as illustrated in the upper left of FIG. 5, the user terminal 30 displays a first authentication screen SC5 for first authentication, which is authentication in the first service, on the display unit 35. The first authentication is authentication for checking the validity of the first user account, which is the account of the user in the first service. The first authentication screen SC5 includes an input form F50 for receiving input of the first user account.

For example, when the user inputs the first user account in the input form F50 and selects a button B51, the first server 10 executes the first authentication. In the first authentication, input of a first password which is a password corresponding to the first user account may be requested. The first authentication may be multi-factor authentication which combines a plurality of types of authentication. For example, the first authentication may combine authentication which checks the validity of the first user account with biometric authentication which is performed by using the user terminal 30.

For example, when the first authentication is completed, the user terminal 30 acquires the first recovery key from the first server 10. As illustrated in the upper right of FIG. 5, the user terminal 30 displays, on the display unit 35, a second user account selection screen SC6 for the user to select the second user account. In the example of the upper right of FIG. 5, only one panel P60 indicating the second user account is displayed, but as in modification examples described later, when the user has a plurality of second user accounts, a plurality of panels P60 may be displayed.

For example, when the user selects the panel P60, as illustrated in the lower left of FIG. 5, the user terminal 30 displays, on the display unit 35, a private key recovery screen SC7 for recovering the first private key. The private key recovery screen SC7 includes a button B70 for the user to recover the first private key, and a button B71 for the user to cancel the recovery of the first private key. In the example of the lower left of FIG. 5, the backup file is stored in a storage area associated with the second user account selected by the user, and hence the user can recover the first private key. When the backup file is not stored, an error message is displayed on the private key recovery screen SC7.

For example, when the user selects the button B70, the user terminal 30 acquires the second recovery key included in the backup file from the second server 20. The user terminal 30 recovers the first private key based on the first recovery key and the second recovery key. When the first private key is recovered, the user becomes able to use the first service again. As illustrated in the lower right of FIG. 5, the user terminal 30 displays a first service screen SC8 showing the crypto assets owned by the user on the display unit 35 based on the first private key.

As described above, in the private key recovery system 1, when the user loses the first private key, the user can recover the first private key from the first app. As a result, the private key recovery system 1 can increase the convenience of the user. Further, by managing the information required for recovery of the first private key in a distributed manner between the first service and the second service, in order for a malicious third party to illegitimately acquire the first private key, the malicious third party is required to break through the security of each of the first service and the second service, and hence the private key recovery system 1 can also increase security during the recovery of the first private key. Details of the private key recovery system 1 are described below.

### [3. Functions Implemented in Private Key Recovery System]

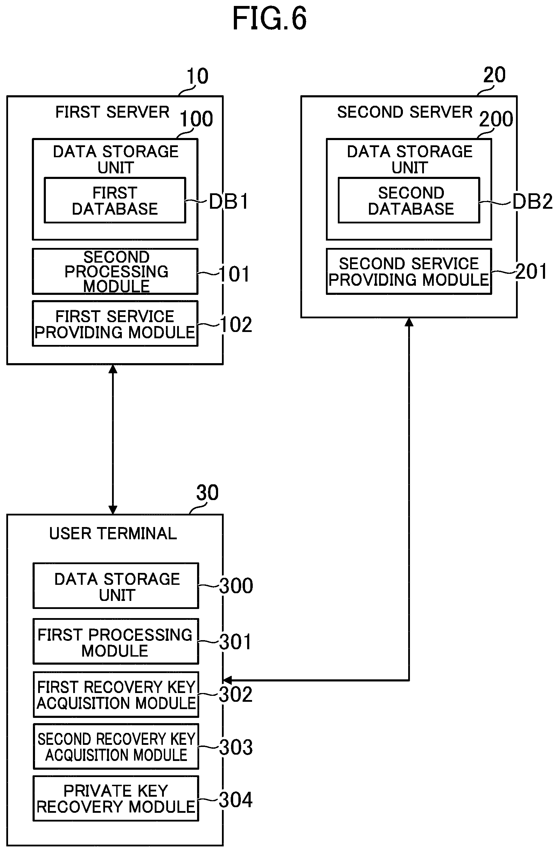

FIG. 6 is a diagram for illustrating an example of functions implemented in the private key recovery system 1.

### [3-1. Functions Implemented in First Server]

For example, the first server 10 includes a data storage unit 100, a second processing module 101, and a first service providing module 102. The data storage unit 100 is implemented by the storage unit 12. Each of the second processing module 101 and the first service providing module 102 is implemented by the control unit 11.

### [Data Storage Unit]

The data storage unit 100 stores various types of data in the first service. For example, the data storage unit 100 stores a first database DB1.

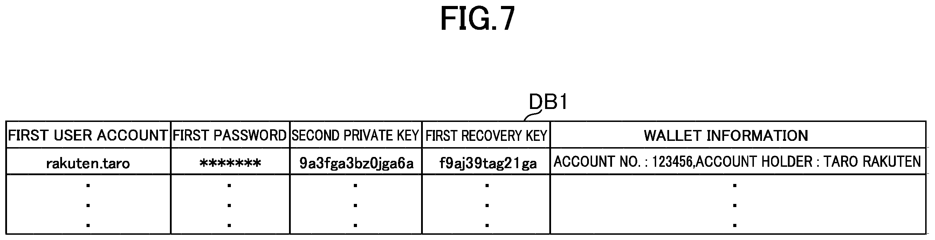

FIG. 7 is a table for showing an example of the first database DB1. The first database DB1 is a database in which various kinds of information on users who use the first service are stored. For example, the first database DB1 stores a first user account, a first password, a second private key, a first recovery key, and wallet information. The first database DB1 may store other information. For example, the first database DB1 may store a universally unique identifier (UUID), which is described in the modification examples described later.

The first user account is information that can identify the user in the first service. The first user account may be used to log in to the first service, or a login account may exist in addition to the first user account. The first password is information that is checked at the time of logging in to the first service. When another type of authentication other than the authentication using the first user account and the first password is performed in the first service, authentication information of the another type of authentication may be stored in the first database DB1.

The second private key is a private key that is referred to when the first service is used. The second private key is managed by the first service. In the at least one embodiment, a case in which the second private key is managed by the first service by storing the second private key in the first database DB1 is taken as an example, but the second private key may be managed by another database other than the first database DB1, another computer other than the first server 10, or an information storage medium. The another database, the another computer, or the information storage medium is assumed to be under the management of the operator of the first service.

For example, the second private key may be characters, numbers, symbols, or a combination of those. The second private key may be the same as a publicly-known key. An algorithm for generating the second private key may also be the same as a publicly-known key-generation algorithm. In the at least one embodiment, a case in which the second private key is generated by using multi-party computation (MPC) technology is taken as an example. For example, the second private key may be generated by using the MPC technology from Blockdaemon (trademark). The MPC technology used in the at least one embodiment is a mechanism in which the user and the operator of the first service each hold a split private key. This significantly reduces risk resulting from the loss of the private key by the user, and contributes to preventing token (crypto asset) theft.

The first recovery key is a recovery key that is used in the recovery of the first secret key. The first recovery key is managed by the first service. In the at least one embodiment, a case in which the first recovery key is managed by the first service by storing the first recovery key in the first database DB1 is taken as an example, but the first recovery key may be managed by another database other than the first database DB1, another computer other than the first server 10, or an information storage medium. The another database, the another computer, or the information storage medium is assumed to be under the management of the operator of the first service.

For example, the first recovery key may be characters, numbers, symbols, or a combination of those. The first recovery key may be the same as a publicly-known key. An algorithm for generating the first recovery key may also be the same as a publicly-known key-generation algorithm. In the at least one embodiment, similarly to the second private key, a case in which the first recovery key is generated by using the MPC technology is taken as an example. For example, the first recovery key may be generated by using the MPC technology from Blockdaemon (trademark) .

The wallet information is information on the wallet of the user. For example, the wallet information may be information that can identify the wallet of the user (for example, information on an account which manages crypto assets), information on the crypto assets managed in the wallet, a transaction history of the user, or other information. The first server 10 may require the user to possess the first private key as a condition for the user to access his or her own wallet information.

The data stored in the data storage unit 100 is not limited to the example described above. The data storage unit 100 may store data relating to the first service. For example, the data storage unit 100 may store data required for displaying various screens on the first app. The data storage unit 100 may store programs for generating each of the first private key, the second private key, the first recovery key, and the second recovery key.

For example, when the user performs use registration of the first service, the first server 10 executes a program for generating a first private key and a second private key, and generates the first private key and the second private key. In the at least one embodiment, a case in which the first server 10 generates the first private key and the second private key by generating a private key that is the source of a first private key and a second private key, and splitting the source private key into the first private key and the second private key is taken as an example. The series of steps in this flow may be the same as those adopted in the publicly-known MPC technology. The first server 10 transmits the first private key to the user terminal 30. The first server 10 stores the second private key in association with the first user account of the user.

The first server 10 may generate the first private key and the second private key separately, instead of splitting a private key that serves as the source of the first private key and the second private key. In other words, the first server 10 may execute a program for generating a first private key, and generate the first private key without generating a source private key. The first server 10 may execute a program for generating a second private key, and generate the second private key without generating a source private key. The first server 10 may generate the first private key and the second private key based on a method other than the MPC technology (for example, a method for generating a random symbol string, or a public key cryptography method that does not use the MPC technology).

For example, when the user performs use registration of the first service, the first server 10 executes a program for generating a first recovery key and a second recovery key, and generates the first recovery key and the second recovery key. In the at least one embodiment, a case in which the first server 10 generates the first recovery key and the second recovery key by splitting the first private key into a first recovery key and a second recovery key is taken as an example. The series of steps in this flow may be the same as those adopted in the publicly-known MPC technology. The first server 10 stores the first recovery key in association with the first user account of the user. The first server 10 transmits the second recovery key to the second server 20. The first server 10 may transmit the second recovery key to the second server 20 indirectly via the user terminal 30.

The first server 10 may generate the first recovery key and the second recovery key separately, instead of splitting a first private key that serves as the source of the first recovery key and the second recovery key. In other words, the first server 10 may execute a program for generating a first recovery key, and generate the first recovery key without splitting a first private key. The first server 10 may execute a program for generating a second recovery key, and generate the second recovery key without splitting a first private key. The first server 10 may generate the first recovery key and the second recovery key based on a method other than the MPC technology (for example, a method for generating a random symbol string, or a public key cryptography method that does not use the MPC technology). For example, the first server 10 may use a part of the first private key as the first recovery key and the remaining part of the first private key as the second recovery key. The first server 10 may generate the first recovery key and the second recovery key such that the first private key is split into the first recovery key and the second recovery key when the first private key is substituted into a predetermined calculation expression.

In the at least one embodiment, a case in which the first server 10 generates the first private key, the second private key, the first recovery key, and the second recovery key is taken as an example, but at least one of the first private key, the second private key, the first recovery key, or the second recovery key may be generated by another computer other than the first server 10. For example, in the MPC technology, keys may be generated by a computer of a trusted third party, and hence the first private key, the second private key, the first recovery key, and the second recovery key may be generated by the computer of a third party. For example, the first server 10 may acquire the second private key and the first recovery key generated by the another computer. The user terminal 30 may acquire the first private key generated by the another computer. The second server 20 may acquire the second recovery key generated by the another computer.

For example, at least two of the first server 10, the second server 20, and the user terminal 30 may work together with each other by using a distributed protocol method to generate the first private key, the second private key, the first recovery key, and the second recovery key. The distributed protocol method may be a publicly-known method, and may be, for example, Shamir's secret sharing method or a method called distributed key generation (DKG). The method used to share the first private key, the second private key, the first recovery key, and the second recovery key may be the same as a publicly-known distributed protocol method.

### [Second Processing Module]

The second processing module 101 processes a second portion, which is different from a first portion, of transmission information based on the second private key managed by the first service. The second private key managed by the first service is a second private key stored in a computer or information storage medium managed by the operator of the first service. In the at least one embodiment, a case in which the second private key stored in the first database DB1 corresponds to the second private key managed by the first service is taken as an example. The second private key may be stored in another database other than the first database DB1, another computer other than the first server 10, or an information storage medium.

The transmission information is information which is transmitted to the network N when the first service is used by the user. In the at least one embodiment, a case in which the first service is used by the user to perform a crypto asset transaction is taken as an example, and hence the transaction information on the crypto asset corresponds to the transmission information. The transmission information is not limited to the transaction information on a crypto asset. The transmission information may be another piece of information other than the transaction information on a crypto asset. For example, the transmission information may be transaction information on a financial asset other than crypto assets (for example, stocks or real estate), a transaction object other than a financial asset (for example, a non-fungible token such as a work of art), personal information on the user, confidential information that is not considered to be personal information, or other information.

The first portion is the portion of the transmission information that is processed by a first processing module 301, which is described later. Which portion of the transmission information becomes the first portion is determined in advance. For example, when the data length of the transmission information is fixed, the first portion may be the portion from the beginning to a predetermined bit. The first portion is not limited to the beginning portion of the transmission information, and may be an intermediate portion or an end portion. The transmission information may be composed of only the first portion and the second portion, or may include another portion other than the first portion and the second portion. In other words, the transmission information may include a portion that is not the subject of signing.

The second portion is the portion of the transmission information that is processed by the second processing module 101. The second portion is a portion different from the first portion. Which portion of the transmission information becomes the second portion is determined in advance. The second portion may be all of the transmission information other than the first portion, or may be a part of the remaining portion. For example, when the data length of the transmission information is fixed, the second portion may be the portion from the bit next to the last bit of the first portion to the last or a predetermined bit. The second portion is not limited to the last portion of the transmission information, and may be the beginning portion or an intermediate portion.

For example, when the first server 10 receives the transmission information from the user terminal 30 of a certain user, the second processing module 101 acquires the second private key associated with the first user account of the certain user from the first database DB1. The first server 10 may acquire the first user account from the user terminal 30, or may acquire information with which the first user account is retrievable (for example, a session ID capable of identifying a session between the first server 10 and the user terminal 30, or a UUID described later). The second processing module 101 may acquire the second private key from another database other than the first database DB1, another computer other than the first server 10, or an information storage medium.

For example, the second processing module 101 processes the second portion by signing the second portion based on the second private key. The second processing module 101 may sign the second portion based on the second private key and a predetermined signature algorithm. The signature algorithm may be a publicly-known algorithm. For example, the signature algorithm may be a library provided in a programming language such as Python (for example, a cryptography library in Python), or may be an algorithm that is not particularly related to a library in a programming language (for example, Rivest-Shamir-Adleman (RSA) or digital signature algorithm (DSA)).

The processing executed by the second processing module 101 may be any processing in which the second private key is used. The processing executed by the second processing module 101 is not limited to signing the second portion. For example, the second processing module 101 may process the second portion by encrypting the second portion based on the second private key and an encryption algorithm. The second processing module 101 may process the second portion by decrypting the second portion based on the second private key and a decryption algorithm. The second processing module 101 may process the second portion by issuing a digital certificate corresponding to the second portion based on the second private key.

### [First Service Providing Module]

The first service providing module 102 provides the first service to the user. Providing the first service to the user means executing information processing for the user to use the first service. For example, the first service providing module 102 provides the first service to the user by displaying various screens of the first service (for example, the screens illustrated in FIG. 2 and FIG. 5) on the user terminal 30. The first service providing module 102 provides the first service to the user by updating the first database DB1 based on data received from the user terminal 30.

In the at least one embodiment, the first service providing module 102 provides the first service to the user based on the transmission information in which the first portion and the second portion have been processed. For example, the first service providing module 102 provides the first service to the user by transmitting the transmission information in which the first portion and the second portion have been processed to the network N. The first service providing module 102 may provide the first service to the user by, instead of transmitting transmission information in which the first portion and the second portion have been processed to the network N, using the transmission information in internal information processing.

In the at least one embodiment, a case in which the first service is a service in which the user performs a transaction relating to a financial asset is taken as an example. Further, transaction information is described as an example of the transmission information. For this reason, the first service providing module 102 provides the first service to the user by transmitting, to a blockchain network, transaction information, which is information on a transaction, that has been processed by using at least the first private key (in the at least one embodiment, the first private key and the second private key). The method by which the first service providing module 102 transmits the signed transaction information to the blockchain network may be the same as the method used in a publicly-known crypto asset service.

### [3-2. Functions Implemented in Second Server]

For example, the second server 20 includes a data storage unit 200 and a second service providing module 201. The data storage unit 200 is implemented by the storage unit 22. The second service providing module 201 is implemented by the control unit 21.

### [Data Storage Unit]

The data storage unit 200 stores various types of data in the second service. For example, the data storage unit 200 stores a second database DB2.

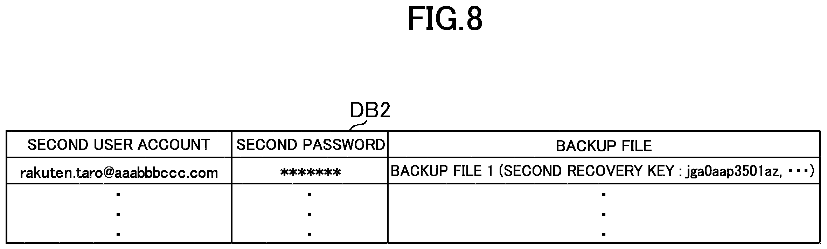

FIG. 8 is a table for showing an example of the second database DB2. The second database DB2 is a database in which various kinds of information on users who use the second service are stored. For example, the second database DB2 stores a second user account, a second password, and a backup file including a second recovery key. The second database DB2 may store other information. For example, the second database DB2 may store various kinds of files, such as document files or image files, uploaded from the user terminal 30 to the second service (for example, files uploaded for a backup purpose).

The second user account is information capable of identifying the user in the second service. The second user account may be used to log in to the second service, or a login account may exist in addition to the second user account. In the at least one embodiment, a case in which the first user account and the second user account are different from each other is taken as an example, but the first user account and the second user account may be the same as each other. That is, a common user account may be used for the first service and the second service.

The second password is information that is checked at the time of logging in to the second service. When another type of authentication other than the authentication using the second user account and the second password is performed in the second service, authentication information of the another type of authentication may be stored in the second database DB2. In the at least one embodiment, a case in which the first password and the second password are different from each other is taken as an example, but the first password and the second password may be the same as each other. That is, a common password may be used for the first service and the second service.

The backup file is a file used in the recovery of the first private key. For example, the backup file indicates the second recovery key. When another piece of information other than the second recovery key is used in the recovery of the first private key, the backup file may include the another piece of information other than the second recovery key. The backup file may include information which is not particularly used in the recovery of the first private key. The backup file is stored in a storage area assigned to the second user account among the storage areas in the data storage unit 200.

The data stored in the data storage unit 200 is not limited to the example described above. The data storage unit 200 may store data relating to the second service. For example, the data storage unit 200 may store data required for displaying various screens for the second service. The data storage unit 200 may store data required in order for the first service and the second service to work together with each other.

### [Second Service Providing Module]

The second service providing module 201 provides the second service to the user. Providing the second service to the user means executing information processing for the user to use the second service. For example, the second service providing module 201 provides the second service to the user by displaying various screens of the second service (for example, screens for uploading or downloading various kinds of data) on the user terminal 30.

For example, the second service providing module 201 receives data selected by a certain user from the user terminal 30 of the certain user. The second service providing module 201 stores the data in the second database in association with the second user account of the certain user. The second service providing module 201 acquires the data selected by the certain user from the second database and transmits the data to the user terminal 30.

For example, when the certain user performs use registration of the first service, the second service providing module 201 acquires the second recovery key from the first server 10, the user terminal 30, or another computer. The second service providing module 201 stores the second recovery key in the second database in association with the second user account of the certain user. When the certain user performs an operation for recovery of the first private key, the second service providing module 201 acquires the second recovery key associated with the second user account of the certain user from the second database. The second service providing module 201 transmits the second recovery key to the user terminal 30 of the certain user.

### [3-3. Functions Implemented in User Terminal]

For example, the user terminal 30 includes a data storage unit 300, the first processing module 301, a first recovery key acquisition module 302, a second recovery key acquisition module 303, and a private key recovery module 304. The data storage unit 300 is implemented by the storage unit 32. The first processing module 301, the first recovery key acquisition module 302, the second recovery key acquisition module 303, and the private key recovery module 304 are implemented by the control unit 31.

### [Data Storage Unit]

The data storage unit 300 stores data required for the user to use each of the first service and the second service. For example, the user terminal 30 receives the first app from a computer which distributes the first app, and records the first app in the data storage unit 300. The user terminal 30 receives the first private key from the first server 10, and records the first private key in the data storage unit 300. When the first service is used by the user from a browser instead of the first app, the data storage unit 300 stores the browser. In a case in which a second app, which is an application for the second service, has been prepared, the data storage unit 300 may store the second app.

### [First Processing Module]

The first processing module 301 processes, based on the first private key, the first portion of the transmission information transmitted from the user terminal 30. The first processing module 301 processes the first portion by signing the first portion based on the first private key. The first processing module 301 may sign the first portion based on the first private key and a predetermined signature algorithm. The signature algorithm may be a publicly-known algorithm. For example, the signature algorithm may be a library provided in a programming language such as Python (for example, a cryptography library in Python), or may be an algorithm that is not particularly related to a library in a programming language (for example, Rivest-Shamir-Adleman (RSA) or digital signature algorithm (DSA)).

The processing executed by the first processing module 301 may be any processing in which the first private key is used. The processing executed by the first processing module 301 is not limited to signing the first portion. For example, the first processing module 301 may process the first portion by encrypting the first portion based on the first private key and an encryption algorithm. The first processing module 301 may process the first portion by decrypting the first portion based on the first private key and a decryption algorithm. The first processing module 301 may process the first portion by issuing a digital certificate corresponding to the first portion based on the first private key.

### [First Recovery Key Acquisition Module]

The first recovery key acquisition module 302 acquires the first recovery key managed by the first service in which the first private key stored in the user terminal 30 of the user is used. In the at least one embodiment, the first recovery key is managed by the first server 10 of the first service, and hence the first recovery key acquisition module 302 acquires the first recovery key by downloading the first recovery key from the first server 10 of the first service to the user terminal 30. The first recovery key may be managed by another computer other than the first server 10, or by an information storage medium. In this case, the first recovery key acquisition module 302 may acquire the first recovery key from the another computer or the information storage medium.

For example, the first recovery key acquisition module 302 transmits to the first server 10 a request for the first recovery key associated with the first user account of the user who wants to recover the first private key. The request for the first recovery key may include the first user account, or may include other information with which the first recovery key is retrievable (for example, a session ID capable of identifying a session between the first server 10 and the user terminal 30, or other information capable of identifying the user). When the first server 10 receives the request for the first recovery key, the first server 10 acquires the first recovery key associated with the first user account from the first database DB1 based on the request, and transmits the acquired first recovery key to the user terminal 30. The first recovery key acquisition module 302 acquires the first recovery key from the first server 10.

In the at least one embodiment, the first recovery key acquisition module 302 acquires the first recovery key associated with the first user account when the first authentication relating to the first user account in the first service is executed. The first authentication is the authentication executed when the first recovery key is acquired. In the example of the upper left of FIG. 5, a case in which authentication for checking the validity of the first user account input from the first authentication screen SC5 corresponds to the first authentication is taken as an example. The first authentication is not limited to authentication for checking the validity of the first user account. For example, the first authentication may be authentication for checking the validity of not only the first user account but also the first password, knowledge authentication, biometric authentication, or possession authentication in which the first user account is not used.

### [Second Recovery Key Acquisition Module]

The second recovery key acquisition module 303 acquires the second recovery key managed by the second service which is different from the first service. In the at least one embodiment, the second recovery key is managed by the second server 20 of the second service, and hence the second recovery key acquisition module 303 acquires the second recovery key by downloading the second recovery key from the second server 20 of the second service to the user terminal 30. The second recovery key may be managed by another computer other than the second server 20, or by an information storage medium. In this case, the second recovery key acquisition module 303 may acquire the second recovery key from the another computer or the information storage medium.

For example, the second recovery key acquisition module 303 transmits to the second server 20 a request for the second recovery key associated with the second user account of the user who wants to recover the second private key. The request for the second recovery key may include the second user account, or may include other information with which the second recovery key is retrievable (for example, a session ID capable of identifying a session between the second server 20 and the user terminal 30, or other information capable of identifying the user). When the second server 20 receives the request for the second recovery key, the second server 20 acquires the second recovery key associated with the second user account from the second database DB2 based on the request, and transmits the acquired second recovery key to the user terminal 30. The second recovery key acquisition module 303 acquires the second recovery key from the second server 20.

The second recovery key acquisition module 303 acquires the second recovery key associated with the second user account when the second authentication relating to the second user account in the second service is executed. The second authentication is the authentication executed when the second recovery key is acquired. In the example of the upper right of FIG. 5, a case in which authentication for checking the validity of the second user account selected from the second user account selection screen SC6 corresponds to the second authentication is taken as an example. For example, the same authentication screen as that in the upper left of FIG. 5 may be used in the second authentication. The second authentication is not limited to authentication for checking the validity of the second user account. For example, the second authentication may be authentication for checking the validity of not only the second user account but also the second password, knowledge authentication, biometric authentication, or possession authentication in which the second user account is not used.

### [Private Key Recovery Module]

The private key recovery module 304 recovers the first private key based on the first recovery key and the second recovery key. The recovery of the first private key can also be referred to as recreation or restoration of the first private key. In the at least one embodiment, the recovery of the first private key is executed in the user terminal 30, and hence the private key recovery module 304 recovers the first private key in the user terminal 30 based on the first recovery key and the second recovery key. After the user terminal 30 acquires the first recovery key and the second recovery key, the private key recovery module 304 can recover the first private key without communicating to or from another computer other than the user terminal 30.

For example, the private key recovery module 304 recovers the first private key based on a publicly-known recovery algorithm. The private key recovery module 304 may recover the first private key by using the MPC technology. For example, the private key recovery module 304 may recover the first private key by using the MPC technology from Blockdaemon (trademark). In the at least one embodiment, the first private key is split to generate a first recovery key and a second recovery key, and hence the private key recovery module 304 recovers the first private key by combining the first recovery key and the second recovery key. The processing for recovering the first private key is as described for the first app.

The method of recovering the first private key is not limited to the method of combining the first recovery key and the second recovery key. The private key recovery module 304 may recover the first private key from the first recovery key and the second recovery key based on a predetermined recovery algorithm. For example, the private key recovery module 304 may recover the first private key by adding together the first recovery key and the second recovery key based on a predetermined calculation expression. The private key recovery module 304 may recover the first private key while communicating to and from the first server 10, the second server 20, or another computer.

### [4. Processing Executed in Private Key Recovery System]

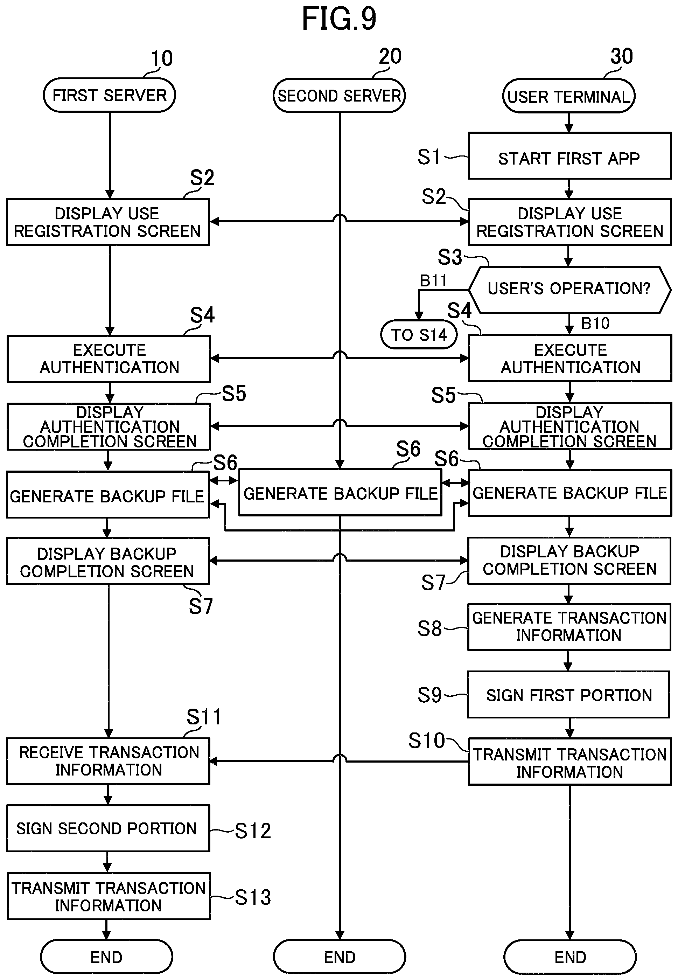

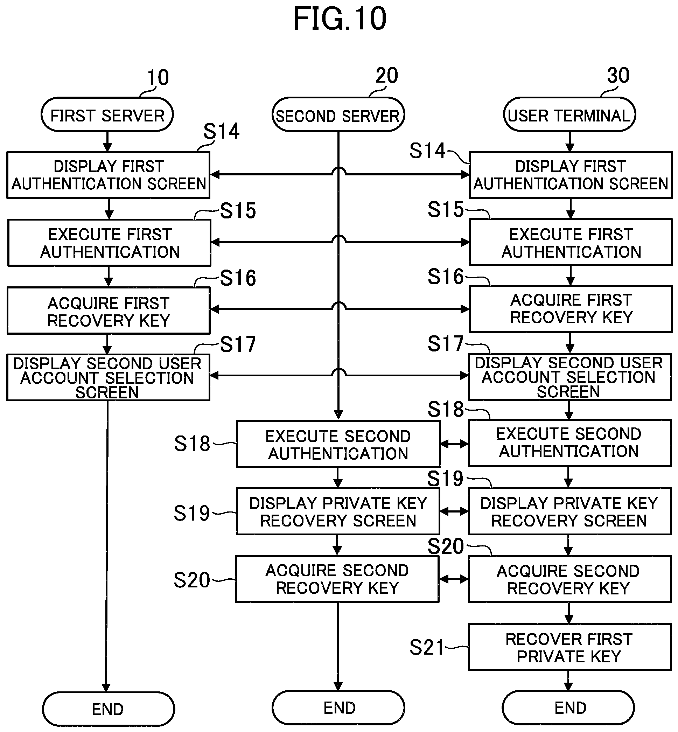

FIG. 9 and FIG. 10 are flow charts for illustrating an example of use processing executed in the private key recovery system 1. The processing of FIG. 9 is executed by the control units 11, 21, and 31 executing programs stored in the storage units 12, 22, and 32, respectively.

As illustrated in FIG. 9, when the user selects the first app, the user terminal 30 starts the first app (Step S1). The user terminal 30 executes, between the user terminal 30 and the first server 10, processing for displaying the use registration screen SC1 (Step S2). The user terminal 30 identifies an operation performed by the user from the operation unit 34 (Step S3). In Step S3, the user performs any one of an operation of selecting the button B10 and an operation of selecting the button B11.

In Step S3, when the user selects the button B10 ("B10" in Step S3), the user terminal 30 executes, between the user terminal 30 and the first server 10, authentication that is performed at the time of use registration of the first service (Step S4). The user terminal 30 executes, between the user terminal 30 and the first server 10, processing for displaying the authentication completion screen SC2 (Step S5). The user terminal 30 executes, between the user terminal 30 and the first server 10, processing for displaying the generation screen SC3. When the user selects the button B30, the user terminal 30 executes, among the user terminal 30, the first server 10, and the second server 20, processing for generating a backup file (Step S6).

In Step S6, the first server 10 generates an original private key. The first server 10 generates a first private key and a second private key based on the original private key. The first server 10 generates a first recovery key and a second recovery key based on the first private key. The first server 10 stores the second private key and the first recovery key in the first database DB1. The first server 10 transmits the first private key to the user terminal 30. The user terminal 30 records the first private key in the storage unit 32. The first server 10 transmits the second recovery key to the second server 20. The second recovery key may be transmitted from the first server 10 to the second server 20 via the user terminal 30. The second server 20 stores the second recovery key in the second database DB2. When the processing of Step S6 is executed, second authentication using a second user account may be executed.

The user terminal 30 executes, among the user terminal 30, the first server 10, and the second server 20, processing for displaying the backup completion screen SC4 (Step S7). After this processing, the user is able to use the first service. When the user performs an operation of performing a transaction in the first service, the user terminal 30 generates transaction information (Step S8). The user terminal 30 signs a first portion of the transaction information based on the first private key stored in the storage unit 32 (Step S9).

The user terminal 30 transmits the transaction information signed by using the first private key to the first server 10 (Step S10). The first server 10 receives the transaction information from the user terminal 30 (Step S11). The first server 10 signs a second portion of the transaction information based on the second private key (Step S12). The first server 10 transmits the signed transaction information to the blockchain network (Step S13), and the process ends. In Step S8 to Step S13, a case in which processing that is performed at the time of a transaction is executed is taken as an example, but the same processing may be executed when the first service screen SC8 is displayed as well.

In Step S3, when the user selects the button B11 ("B11" in Step S3), the process advances to FIG. 10, and the user terminal 30 executes, between the user terminal 30 and the first server 10, processing for displaying the first authentication screen SC5 (Step S14). The user terminal 30 executes, between the user terminal 30 and the first server 10, first authentication using the first user account (Step S15). In a case in which the first authentication fails, the process ends. In a case in which the first authentication is successful, the user terminal 30 executes, between the user terminal 30 and the first server 10, processing for acquiring a first recovery key stored in the first database DB1 (Step S16). In Step S16, the first recovery key associated with the first user account for which the first authentication has been successful is acquired.

The user terminal 30 displays the second user account selection screen SC6 on the display unit 35 (Step S17). In Step S17, the user terminal 30 may execute the processing for displaying the second user account selection screen SC6 between the user terminal 30 and the first server 10, or may execute the processing for displaying the second user account selection screen SC6 between the user terminal 30 and the second server 20. The user terminal 30 may display the second user account selection screen SC6 on the display unit 35 by communicating to and from both the first server 10 and the second server 20.

The user terminal 30 executes, between the user terminal 30 and the second server 20, second authentication using the second user account (Step S18). In a case in which the second authentication fails, the process ends. In a case in which the second authentication is successful, the user terminal 30 executes, between the user terminal 30 and the second server 20, processing for displaying the private key recovery screen SC7 (Step S19). When the user selects the button B70, the user terminal 30 executes, between the user terminal 30 and the second server 20, processing for acquiring the second recovery key of the backup file stored in the second database DB2 (Step S20). In Step S20, the second recovery key associated with the second user account for which the second authentication has been successful is acquired. The presence or absence of a backup file may be determined by checking for the presence of a file having a predetermined file name indicating that the file is a backup file.

The user terminal 30 recovers the first private key based on the first recovery key and the second recovery key (Step S21), and the process ends. In Step S21, the user terminal 30 recovers the first private key by combining the first recovery key and the second recovery key. The user terminal 30 records the first private key in the storage unit 32. When the user uses the first app after the first private key is recovered, the processing steps of from Step S8 to Step S13 are executed based on the recorded first private key.

### [5. Summary of at Least One Embodiment]

The private key recovery system 1 according to the at least one embodiment acquires the first recovery key managed by the first service in which the first private key stored in the user terminal 30 is used. The private key recovery system 1 acquires the second recovery key managed by the second service. The private key recovery system 1 recovers the first private key based on the first recovery key and the second recovery key. As a result, even when the user loses the first private key, the first private key can be recovered, and hence the private key recovery system 1 can increase the convenience of the user. For example, the private key recovery system 1 can save the user the trouble of calling a call center to resume use of the first service. For example, the user can recover the first private key by performing an operation in the first app. The first recovery key and the second recovery key used in the recovery of the first private key are managed in a distributed manner by the first service and the second service, and hence the private key recovery system 1 can increase security during the recovery of the first private key.

Further, the user terminal 30 acquires the first recovery key by downloading the first recovery key from the first server 10 to the user terminal 30. The user terminal 30 acquires the second recovery key by downloading the second recovery key from the second server 20 to the user terminal 30. The user terminal 30 recovers the first private key within the user terminal 30 based on the first recovery key and the second recovery key. As a result of the user terminal 30 recovering the first private key by itself, instead of requesting another computer to recover the first private key, the private key recovery system 1 can reduce the risk of leakage of the first recovery key and the second recovery key required for recovery of the first private key.

Further, the first service is a service in which a user performs a transaction relating to a financial asset. The private key recovery system 1 provides the first service to the user by transmitting, to the blockchain network, transaction information processed by using the first private key. As a result, even when the user loses the first private key, the user can immediately recover the first private key and perform financial asset transactions, and hence the private key recovery system 1 can increase the convenience of the user who is performing financial asset transactions.

Further, the private key recovery system 1 processes a first portion of the transmission information transmitted from the user terminal 30 based on the first private key. The private key recovery system 1 processes a second portion, which is different from the first portion, of the transmission information based on the second private key managed by the first service. The private key recovery system 1 provides the first service to the user based on the transmission information in which the first portion and the second portion have been processed. As a result, the private key recovery system 1 can increase security in the first service.

Further, the private key recovery system 1 acquires, when the first authentication relating to the first user account is executed, the first recovery key associated with the first user account. As a result, the private key recovery system 1 can increase security during the recovery of the first private key.

Further, the private key recovery system 1 acquires, when the second authentication relating to the second user account is executed, the second recovery key associated with the second user account. As a result, the private key recovery system 1 can increase security during the recovery of the first private key.

### [6. Modification Examples]

The present disclosure is not limited to the at least one embodiment described above. The present disclosure can be modified suitably without departing from the spirit of the present disclosure.

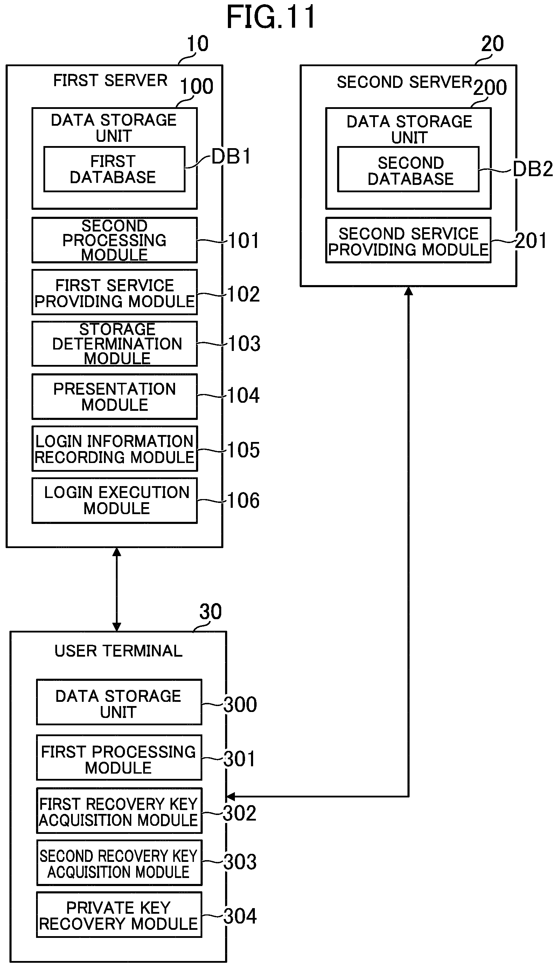

FIG. 11 is a diagram for illustrating an example of functions implemented in the modification examples. For example, the first server 10 in the modification examples includes a storage determination module 103, a presentation module 104, a login information recording module 105, and a login execution module 106. Each of the storage determination module 103, the presentation module 104, the login information recording module 105, and the login execution module 106 is implemented by the control unit 11.

### [6-1. Modification Example 1]

For example, the user may separately use a plurality of second user accounts in the second service. For this reason, when the user has a plurality of second user accounts in the second service, the second recovery key may be associated with a second user account selected by the user from among the plurality of second user accounts. In Modification Example 1, a case in which the user selects only one of the plurality of second user accounts is taken as an example, but the user may select a plurality of the second user accounts. That is, in Modification Example 1, a case in which the second recovery key is associated with only one second user account is taken as an example, but the second recovery key may be associated with each of the plurality of second user accounts.

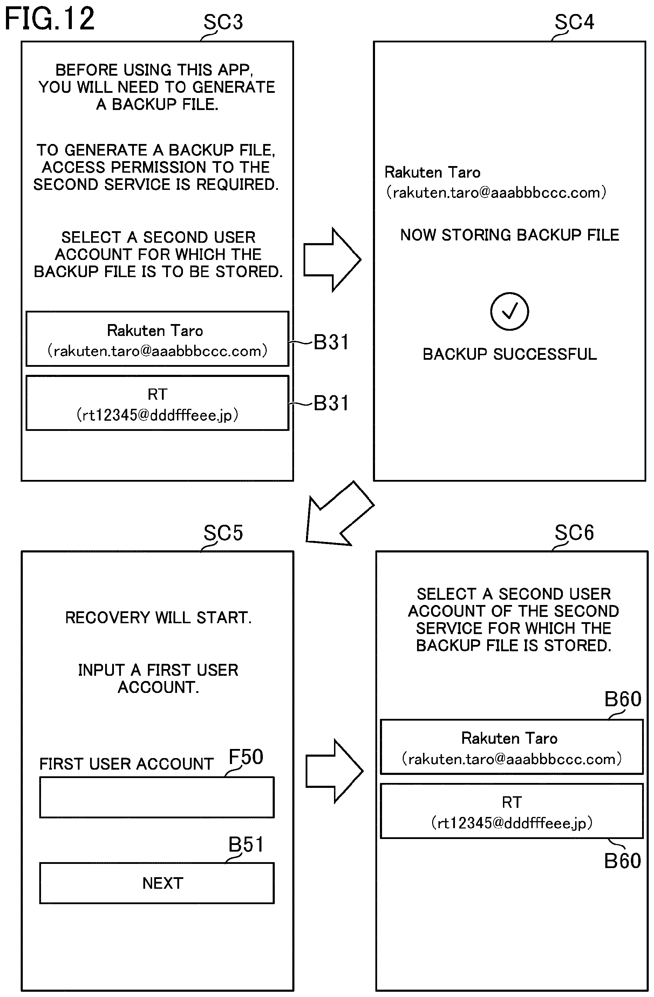

FIG. 12 is a view for illustrating an example of screens displayed on the user terminal 30 in Modification Example 1. As illustrated in the upper left of FIG. 12, the user terminal 30 displays the generation screen SC3 including buttons B31 respectively indicating a plurality of second user accounts on the display unit 35. It is assumed that information on the plurality of second user accounts is stored in advance in the user terminal 30. For example, the information on the plurality of second user accounts may be stored in a cookie of a browser of the user terminal 30. The user selects the button B31 of the second user account with which the second recovery key is to be associated (that is, selects the second user account for which the backup file is to be stored). The user may select the second user account with which the second recovery key is to be associated by, instead of selecting the button B31, manually inputting the second user account into the generation screen SC3.

For example, when the user selects a second user account with which the second recovery key is to be associated, the second server 20 stores a backup file including the second recovery key in association with the second user account in the second database DB2. At that time, the second server 20 may execute the second authentication by using the second user account. The backup file including the second recovery key is not associated with the second user accounts that are not selected by the user. That is, the second server 20 stores the backup file including the second recovery key in the storage area corresponding to the second user account selected by the user among the storage areas corresponding to each of the plurality of second user accounts used by the user. The second server 20 does not store the backup file including the second recovery key in the storage areas corresponding to the second user accounts not selected by the user.

For example, when the storing of the backup file is complete, as illustrated in the upper right of FIG. 12, the user terminal 30 displays, on the display unit 35, the backup completion screen SC4 indicating that the backup file has been stored. When the user starts the first app after having lost the first private key, and performs an operation for recovery, as illustrated in the lower left of FIG. 12, the user terminal 30 displays the first authentication screen SC5 on the display unit 35. The backup completion screen SC4 and the first authentication screen SC5 may be the same as those in the at least one embodiment.

For example, when the validity of the first user account is confirmed, as illustrated in the lower right of FIG. 12, the user terminal 30 displays the second user account selection screen SC6 including buttons B60 respectively indicating the plurality of second user accounts on the display unit 35. The user can select a second user account by selecting a button B60. The user may select the second user account which is associated with the second recovery key by manually inputting the second user account into the second user account selection screen SC6, instead of selecting the button B60.

The second recovery key acquisition module 303 in Modification Example 1 acquires, when the second authentication of the second user account selected by the user from among the plurality of second user accounts is executed, the second recovery key associated with the second user account. For example, when the backup file is stored in the second user account indicated by the button B60 selected by the user, the second recovery key acquisition module 303 acquires the second recovery key in the same manner as in the at least one embodiment. The processing executed by the private key recovery module 304 after the second recovery key is acquired is the same as in the at least one embodiment. When the backup file is not stored in the second user account indicated by the button B60 selected by the user, an error occurs, and the first private key is not recovered. In this case, the second user account selection screen SC6 may be displayed again.

In Modification Example 1, when the user has a plurality of second user accounts in the second service, the second recovery key is associated with the second user account selected by the user from among the plurality of second user accounts. When the second authentication of the second user account selected by the user from among the plurality of second user accounts is executed, the private key recovery system 1 acquires the second recovery key associated with the second user account. As a result, the user can recover the first private key by associating the second recovery key with a desired second user account among the plurality of second user accounts, and hence the private key recovery system 1 can increase the convenience of the user.

### [6-2. Modification Example 2]

For example, the second recovery key of the user and a second recovery key of another user different from the user may be associated with the second user account. As used herein, "user" is the user who wants to recover the first private key. That is, in Modification Example 2, the term "user" refers to a user who has lost the first private key (user who performs the operation to recover the first private key). The user in Modification Example 2 may or may not be the holder of the second user account.

The another user is a person having some sort of relationship with the user. For example, the another user may be a family member or a relative of the user, or may be a person other than a family member or a relative of the user (for example, a person belonging to the same organization, for example, the same company, as that of the user). The another user may or may not be the holder of the second user account. For example, when the holder of the second user account is a father, and the father manages the second recovery key on behalf of the family, the second user account of the father may be associated with the second recovery key of the father and the second recovery keys of family members such as his wife or children.

In Modification Example 2, a plurality of second recovery keys are associated with the second user account, and hence information capable of identifying which second recovery key belongs to which person (for example, information such as a UUID (described later), a first user account, or a name) is stored in the second database DB2. Which second recovery key belongs to which person is identified by using this information. During recovery of the first private key, which second recovery key is to be acquired from among the plurality of second recovery keys associated with the second user account may be identified based on the information on the user who wants to recover the first private key.

The second recovery key acquisition module 303 in Modification Example 2 acquires the second recovery key of the user from among the second recovery key of the user and the second recovery key of the another user different from the user. For example, the second recovery key acquisition module 303 acquires information capable of identifying the user who wants to recover the first private key (for example, information such as a UUID (described later), a first user account, or a name), and acquires the second recovery key associated with the information. The information may be input to the user terminal 30, or may be acquired by acquiring the first user account of the logged-in user from the first server 10. The second recovery key acquisition module 303 may display information on the plurality of second recovery keys associated with the second user account on the user terminal 30, and acquire the second recovery key selected by the user. The processing executed by the private key recovery module 304 after the second recovery key is acquired is the same as in the at least one embodiment.

In Modification Example 2, the second recovery key of the user and the second recovery key of the another user different from the user are associated with the second user account. The private key recovery system 1 acquires the second recovery key of the user from among the second recovery key of the user and the second recovery key of the another user different from the user. As a result, the private key recovery system 1 can efficiently manage the second recovery key, and hence can increase the convenience of the user. For example, in the above-mentioned example in which the father manages the second recovery key of the family, the second recovery key of the family is associated with the second user account of the father, and hence the private key recovery system 1 can enable the father to manage the second recovery key of the family as well.

### [6-3. Modification Example 3]

For example, there may be a plurality of second services which manage the second recovery key. In this case, the second recovery key may be managed by a second service selected by the user from among the plurality of second services. In Modification Example 3, a case in which the user selects only one of the plurality of second services is taken as an example, but the user may select a plurality of second services. That is, in Modification Example 3, a case in which the second recovery key is associated with only one second service is taken as an example, but the second recovery key may be managed by each of the plurality of second services. The second user account of each of the plurality of second services may be the same as each other or different from each other.

In Modification Example 3, a case in which the operators of the plurality of second services are different from each other is taken as an example, but the operators of the plurality of second services may be the same as each other. Further, a case in which the plurality of second services are the same type of service as each other is taken as an example, but the plurality of second services may be different from each other. In Modification Example 3, like in the at least one embodiment, it is assumed that each of the plurality of second services is a service that manages user data in the cloud. In Modification Example 3, it is assumed that there is a second server 20 corresponding to each of the plurality of second services. The functions of each of the plurality of second servers 20 may be the same.

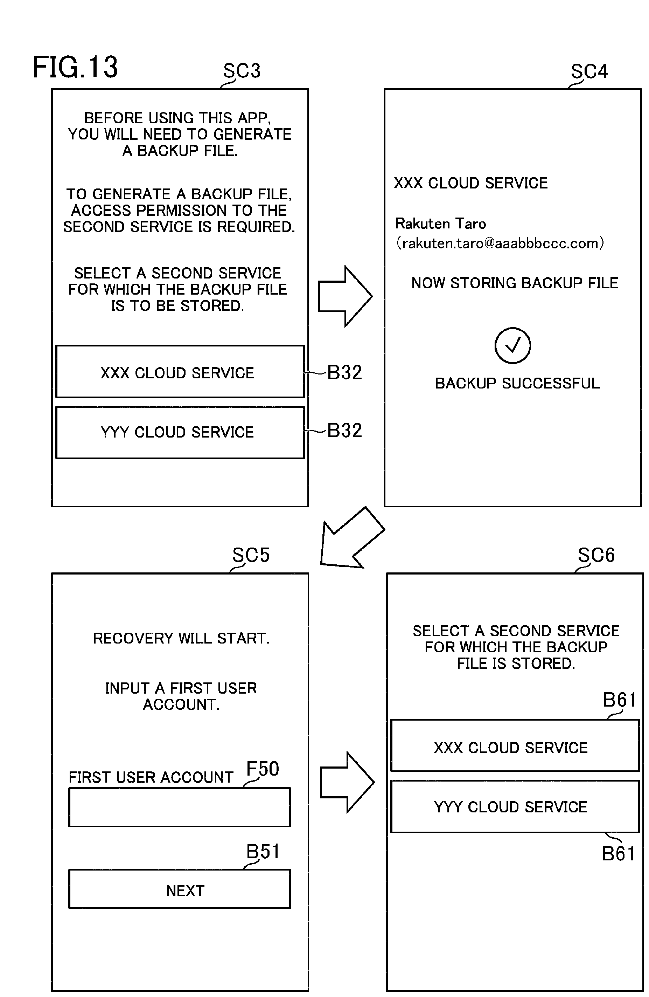

FIG. 13 is a view for illustrating an example of screens displayed on the user terminal 30 in Modification Example 3. As illustrated in the upper left of FIG. 13, the user terminal 30 displays, on the display unit 35, the generation screen SC3 including buttons B32 respectively indicating the plurality of second services. Information on the plurality of second services may be stored in advance in the user terminal 30, or may be transmitted from the first server 10 to the user terminal 30. Further, information on the second user account of each of the plurality of second services may be stored in advance in the user terminal 30. The user selects the button B32 of the second service with which the second recovery key is to be associated (that is, the second service that stores the backup file). The user may select the second service with which the second recovery key is to be associated by, instead of selecting the button B32, manually inputting the name of the second service into the generation screen SC3.

In the example of FIG. 13, two second services, namely, "XXX cloud service" and "YYY cloud service," are shown, but the user may select the second service that stores the backup file from three or more second services. For example, when the user selects the second service with which the second recovery key is to be associated, the user terminal 30 causes the user to select the second user account for the selected second service. The selection of the second user account may be performed in the same manner as in the at least one embodiment, or in the same manner as in Modification Example 1. Only a certain specific second service may permit the user to select one of the plurality of second user accounts, like in Modification Example 1. When only one second user account is available to the user for the other second services, the selection of the second user account is not required to be performed.

For example, the second server 20 of the second service selected by the user stores the backup file including the second recovery key in the second database DB2 in association with the second user account of the second service selected by the user. The backup file including the second recovery key is not stored in the second database DB2 of the second services not selected by the user. That is, the second server 20 of the second service selected by the user among the plurality of second services used by the user stores the backup file including the second recovery key in the second database DB2. The second server 20 of the second services not selected by the user does not store the backup file including the second recovery key in the second database DB2.

For example, when the storing of the backup file is complete, as illustrated in the upper right of FIG. 13, the user terminal 30 displays, on the display unit 35, the backup completion screen SC4 indicating that the backup file has been stored. When the user starts the first app after having lost the first private key, as illustrated in the lower left of FIG. 13, the user terminal 30 displays the first authentication screen SC5 on the display unit 35. The backup completion screen SC4 and the first authentication screen SC5 may be the same as those in the at least one embodiment.

For example, when the validity of the first user account is confirmed, as illustrated in the lower right of FIG. 13, the user terminal 30 displays the second user account selection screen SC6 including buttons B61 respectively indicating the plurality of second services on the display unit 35. The user can select a second service by selecting a button B61. The user may select the second service which is to manage the second recovery key by manually inputting the second service into the second user account selection screen SC6, instead of selecting the button B61.

For example, when the user selects the second service which is to manage the second recovery key, the user terminal 30 causes the user to select the second user account in the second service. The selection of the second user account may be performed in the same manner as in the at least one embodiment, or in the same manner as in Modification Example 1. Only a certain specific second service may permit the user to select one of the plurality of second user accounts, like in Modification Example 1.

The second recovery key acquisition module 303 in Modification Example 3 acquires the second recovery key managed by the second service selected by the user from among the plurality of second services. For example, when the backup file is stored in the second service indicated by the button B61 selected by the user, the second recovery key acquisition module 303 acquires the second recovery key in the same manner as in the at least one embodiment or Modification Example 1. The processing executed by the private key recovery module 304 after the second recovery key is acquired is the same as in the at least one embodiment. When the backup file is not stored in the second service indicated by the button B61 selected by the user, an error occurs, and the first private key is not recovered. In this case, the second user account selection screen SC6 may be displayed again.

In Modification Example 3, the second recovery key is managed by the second service selected by the user from among the plurality of second services. The private key recovery system 1 acquires the second recovery key managed by the second service selected by the user among the plurality of second services. As a result, the user can recover the first private key by managing the second recovery key using a desired second service among the plurality of second services, and hence the private key recovery system 1 can increase the convenience of the user.

### [6-4. Modification Example 4]

For example, the user terminal 30 may store login information used to log in to the first service. The login information is information capable of identifying the user. The login information may be the first user account, but in Modification Example 4, a case in which the login information is a UUID different from the first user account is taken as an example. The login information may be another piece of information other than the first user account or the UUID. For example, the login information may be a session ID capable of identifying a session between the first server 10 and the user terminal 30, authentication information called a token, or the IP address of the user terminal 30.

In Modification Example 4, it is assumed that the login information is stored in the first database DB1. For example, when the user logs in to the first service by using the first user account and the first password, the first server 10 issues a UUID for the user which does not overlap the UUIDs of other users, and stores the issued UUID in the first database DB1. The UUID may be characters, numbers, symbols, or a combination of those. The first server 10 transmits the UUID to the user terminal 30. When the user terminal 30 receives the UUID from the first server 10, the user terminal 30 records the UUID in the storage unit 32.

The private key recovery system 1 according to Modification Example 4 includes the storage determination module 103. The storage determination module 103 determines whether or not login information used to log in to the first service is stored in the user terminal 30. For example, when a user starts the first app, the first server 10 transmits a request for the login information to the user terminal 30. When the login information is stored in the storage unit 32, the user terminal 30 transmits the login information to the first server 10. When the login information is not stored in the storage unit 32, the user terminal 30 does not transmit the login information to the first server 10.

For example, the storage determination module 103 determines whether or not the login information is stored in the user terminal 30 by determining whether or not the login information has been received from the user terminal 30. The storage determination module 103 may determine whether or not the login information received from the user terminal 30 is stored in the first database DB1.

In Modification Example 4, the processing by each of the first recovery key acquisition module 302, the second recovery key acquisition module 303, and the private key recovery module 304 is executed when it is determined that the login information is not stored in the user terminal 30. The processing by each of the first recovery key acquisition module 302, the second recovery key acquisition module 303, and the private key recovery module 304 is not required to be executed when it is determined that the login information is stored in the user terminal 30.

For example, when it is determined that the login information is stored in the user terminal 30, the first server 10 may display, on the user terminal 30, another screen other than the use registration screen SC1 (for example, a screen for the user to input another piece of authentication information other than the login information, a screen for performing biometric authentication, a screen showing a menu of the first app, or the first service screen SC8). When it is determined that the login information is not stored in the user terminal 30, the first server 10 may display the use registration screen SC1 on the user terminal 30.

For example, the processing by each of the first recovery key acquisition module 302, the second recovery key acquisition module 303, and the private key recovery module 304 may be executed when the login information received from the user terminal 30 is stored in the first database DB1. The processing by each of the first recovery key acquisition module 302, the second recovery key acquisition module 303, and the private key recovery module 304 is not required to be executed when it is determined that the login information received from the user terminal 30 is stored in the first database DB1.

For example, when the login information received from the user terminal 30 is stored in the first database DB1, the first server 10 may display, on the user terminal 30, another screen other than the use registration screen SC1 (for example, a screen for logging in to the first service, or the first service screen SC8). When it is determined that the login information received from the user terminal 30 is not stored in the first database DB1, the first server 10 may display the use registration screen SC1 on the user terminal 30.

The private key recovery system 1 according to Modification Example 4 determines whether or not the login information is stored in the user terminal 30. The processing by the first recovery key acquisition module 302, the second recovery key acquisition module 303, and the private key recovery module 304 is executed when it is determined that the login information is not stored in the user terminal 30. As a result, the private key recovery system 1 can recover the first private key when the login information is not stored in the user terminal 30. The private key recovery system 1 can recover the first private key when recovery of the first private key is required, and hence the private key recovery system 1 can increase the convenience of the user.

### [6-5. Modification Example 5]

For example, after the button B11 described in the at least one embodiment is selected, a series of processing steps such as acquisition of the first recovery key is executed, and hence the button B11 corresponds to an instruction object for the user to instruct the execution of the processing by each of the first recovery key acquisition module 302, the second recovery key acquisition module 303, and the private key recovery module 304. The term "button B11" can be read as "instruction object." The instruction object is a part of the user interface for the user to instruct the execution of the processing by each of the above-mentioned modules. The instruction object may be any part, and is not limited to the button B11. For example, the instruction object may be another type of button other than the button B11, a check box, a slide bar, an icon, an image other than an icon, text, or another part.

In Modification Example 5, a case in which whether or not the button B11, which is an example of an instruction object, is presented on the user terminal 30 is controlled based on the determination result of the storage determination module 103 in Modification Example 4 is described as an example. The private key recovery system 1 according to Modification Example 5 includes the presentation module 104. When it is determined that the login information is stored in the user terminal 30, the presentation module 104 does not present the button B11 on the user terminal 30, and when it is determined that the login information is not stored in the user terminal 30, the presentation module 104 presents the button B11 on the user terminal 30.

For example, the presentation module 104 generates, when it is determined that the login information is stored in the user terminal 30, display data of a screen that does not include the button B11 (for example, the another screen described in Modification Example 4, that is, a screen such as a screen for the user to input another piece of authentication information other than the login information, a screen for performing biometric authentication, a screen showing a menu of the first app, or the first service screen SC8), and transmits the generated display data to the user terminal 30. In this case, the button B11 is not selectable by the user. The presentation module 104 generates, when it is determined that the login information is not stored in the user terminal 30, display data of the use registration screen SC1 including the button B11, and transmits the generated display data to the user terminal 30. The processing by each of the first recovery key acquisition module 302, the second recovery key acquisition module 303, and the private key recovery module 304 is executed when an operation is performed on the button B11. The flow of this series of processing steps is as described in the at least one embodiment and Modification Example 4.

The private key recovery system 1 according to Modification Example 5 does not present the button B11 on the user terminal 30 when it is determined that the login information is stored in the user terminal 30, and presents the button B11 on the user terminal 30 when it is determined that the login information is not stored in the user terminal 30. As a result, the private key recovery system 1 can prevent the processing for recovery of the first private key from being executed when the login information is stored in the user terminal 30. That is, the private key recovery system 1 can prevent the execution of processing that is not required. The private key recovery system 1 can recover the first private key when the login information is not stored in the user terminal 30.

### [6-6. Modification Example 6]

For example, in Modification Example 4, not only the first private key but also the login information may be recovered. The private key recovery system 1 according to Modification Example 4 includes the login information recording module 105. The login information recording module 105 records the login information managed by the second service in the user terminal 30 when it is determined that the login information is not stored in the user terminal 30. The login information recording module 105 may generate new login information, or may reuse the login information stored in the first database DB1 as it is. The login information recording module 105 records the login information in the user terminal 30 by transmitting the login information to the user terminal 30.

The login information recording module 105 may be implemented in the user terminal 30 instead of the first server 10. In this case, the login information recording module 105 is implemented by the control unit 31. The login information recording module 105 may acquire the login information from the first server 10, and record the login information in the data storage unit 300. When the login information is managed in the second database DB2 (for example, when the login information is included in the file name of the backup file), the login information recording module 105 may acquire the login information from the second server 20 and record the login information in the data storage unit 300.

The private key recovery system 1 according to Modification Example 6 records the login information managed by the second service in the user terminal 30 when it is determined that the login information is not stored in the user terminal 30. As a result, even when the user loses the login information, the login information can be recovered, and hence the private key recovery system 1 can increase the convenience of the user.

### [6-7. Modification Example 7]

For example, the login information may be information for a user to simply log in to the first service. The private key recovery system 1 according to Modification Example 7 includes the login execution module 106. The login execution module 106 executes, when the login information is stored in the user terminal 30, login to the first service by simpler processing than when the login information is not stored in the user terminal 30.

For example, when the login information is not stored in the user terminal 30, the login execution module 106 executes login to the first service based on the first user account and the first password input by the user. The login execution module 106 determines whether or not the first user account and the first password input by the user are present in the first database DB1. The login execution module 106 does not permit login to the first service when the first user account and the first password input by the user are not present in the first database DB1, and permits login to the first service when the first user account and the first password input by the user are present in the first database DB1. The login execution module 106 may permit login to the first service based on another type of authentication other than the authentication using the first user account and the first password.

For example, the login execution module 106 executes, when the login information is stored in the user terminal 30, login to the first service based on the login information without requesting the user to input at least one of the first user account or the first password. In this case, biometric authentication in the user terminal 30 may be executed instead of inputting at least one of the first user account or the first password. The login execution module 106 determines whether or not the login information received from the user terminal 30 is present in the first database DB1. The login execution module 106 does not permit login to the first service when the login information received from the user terminal 30 is not present in the first database DB1, and permits login to the first service when the login information received from the user terminal 30 is present in the first database DB1. When the biometric authentication is executed, the login execution module 106 permits login to the first service on the condition that the biometric authentication is successful.

The private key recovery system 1 according to Modification Example 7 executes login to the first service by simpler processing when the login information is stored in the user terminal 30 than when the login information is not stored in the user terminal 30. As a result, the private key recovery system 1 can reduce the operational burden on the user for login.

### [6-8. Modification Example 8]

For example, as described somewhat in Modification Example 7, the login execution module 106 may execute login to the first service based on login information stored in the user terminal 30 and login information managed by the first service. In Modification Example 8, a case in which the login information is managed in the first database DB1 is taken as an example. The login information may be stored in another database other than the first database DB1, another computer other than the first server 10, or an information storage medium. In this case, the another database, the another computer, or the information storage medium is considered to be under the management of the operator of the first service.

For example, the login execution module 106 determines whether or not the login information received from the user terminal 30 is present in the first database DB1. The login execution module 106 does not permit login when the login information is not present in the first database DB1, and permits login when the login information is present in the first database DB1. That is, the login execution module 106 determines whether or not the login information received from the user terminal 30 matches the login information stored in the first database DB1. The login execution module 106 does not permit login when the pieces of login information do not match, and permits login when the pieces of login information match.

The private key recovery system 1 according to Modification Example 8 executes login to the first service based on the login information stored in the user terminal 30 and the login information managed by the first service. As a result, the private key recovery system 1 can increase security for logging in to the first service.

### [6-9. Other Modification Examples]

For example, the modification examples described above may be combined.

For example, cases in which the first recovery key acquisition module 302, the second recovery key acquisition module 303, and the private key recovery module 304 are implemented in the user terminal 30 have been taken as examples, but the first recovery key acquisition module 302, the second recovery key acquisition module 303, and the private key recovery module 304 may be implemented in another computer other than the user terminal 30 (for example, the first server 10, the second server 20, or a computer of a trusted third party). A mode in which the first recovery key acquisition module 302, the second recovery key acquisition module 303, and the private key recovery module 304 are implemented in the another computer is also within the scope of the present disclosure.

For example, the transmission information, an example of which is the transaction information, may be information on which only processing using the first private key is executed, and processing using the second private key is not executed. In this case, the first server 10 is not required to include the second processing module 101. The second private key is not required to be managed by the first service, and the second private key is not required to be generated in the first place. A mode in which the first server 10 does not include the second processing module 101 is also within the scope of the present disclosure. That is, a mode in which the second private key is not managed by the first service, and a mode in which the second private key is not generated in the first place are also within the scope of the present disclosure.

For example, it is not required that the first authentication be a condition in order for the first recovery key acquisition module 302 to acquire the first recovery key. When the first private key has been deleted from the user terminal 30 but the login information remains, the first recovery key acquisition module 302 may acquire the first recovery key on the condition that the validity of the login information has been confirmed. In this case, the first recovery key acquisition module 302 may acquire the first recovery key associated with the login information that has been confirmed to be valid. When the first private key has been deleted from the user terminal 30 but the login information remains, the user terminal 30 may display the use registration screen SC1 and proceed with the processing for recovering the first private key.

For example, it is not required that the second authentication be a condition in order for the second recovery key acquisition module 303 to acquire the second recovery key. When the first private key has been deleted from the user terminal 30 but the login information remains, the second recovery key acquisition module 303 may acquire the second recovery key on the condition that the validity of the login information has been confirmed and that biometric authentication, and not the second user account, is successful.

For example, the functions described as being implemented by the first server 10 may be implemented by the second server 20, the user terminal 30, or another computer. The processing described as being implemented by the first server 10 may be shared among a plurality of computers. The processing described as being implemented by the second server 20 may be implemented by the first server 10, the user terminal 30, or another computer. The processing described as being implemented by the second server 20 may be shared among a plurality of computers. The processing described as being implemented by the user terminal 30 may be implemented by the first server 10, the second server 20, or another computer.

While there have been described what are at present considered to be certain embodiments of the invention, it will be understood that various modifications may be made thereto, and it is intended that the appended claims cover all such modifications as fall within the true spirit and scope of the invention.

## Claims

1. A private key recovery system (1), comprising:
a first recovery key acquisition module (302) configured to acquire a first recovery key managed by a first service in which a first private key stored in a user terminal (30) of a user is used;
a second recovery key acquisition module (303) configured to acquire a second recovery key managed by a second service different from the first service; and
a private key recovery module (304) configured to recover the first private key based on the first recovery key and the second recovery key.

2. The private key recovery system (1) according to claim 1,
wherein the user terminal (30) includes the first recovery key acquisition module (302), the second recovery key acquisition module (303), and the private key recovery module (304),
wherein the first recovery key acquisition module (302) is configured to acquire the first recovery key by downloading the first recovery key from a first server (10) of the first service to the user terminal (30),
wherein the second recovery key acquisition module (303) is configured to acquire the second recovery key by downloading the second recovery key from a second server (20) of the second service to the user terminal (30), and
wherein the private key recovery module (304) is configured to recover the first private key in the user terminal (30) based on the first recovery key and the second recovery key.

3. The private key recovery system (1) according to claim 1 or 2,
wherein the first service is a service in which the user performs a transaction relating to a financial asset, and
wherein the private key recovery system (1) further comprises a first service providing module (102) configured to provide the first service to the user by transmitting, to a blockchain network, transaction information relating to the transaction, the transaction information having been processed by using the first private key.

4. The private key recovery system (1) according to any one of claims 1 to 3, further comprising:
a first processing module (301) configured to process, based on the first private key, a first portion of transmission information transmitted from the user terminal (30);
a second processing module (101) configured to process a second portion of the transmission information, the second portion being different from the first portion, based on a second private key managed by the first service; and
a first service providing module (102) configured to provide the first service to the user based on the transmission information in which the first portion and the second portion have been processed.

5. The private key recovery system (1) according to any one of claims 1 to 4, wherein the first recovery key acquisition module (302) is configured to acquire the first recovery key associated with a first user account in the first service when first authentication relating to the first user account is executed.

6. The private key recovery system (1) according to any one of claims 1 to 5, wherein the second recovery key acquisition module (303) is configured to acquire the second recovery key associated with a second user account in the second service when second authentication relating to the second user account is executed.

7. The private key recovery system (1) according to claim 6,
wherein when the user has a plurality of the second user accounts in the second service, the second recovery key is associated with a second user account selected by the user from among the plurality of the second user accounts, and
wherein the second recovery key acquisition module (303) is configured to acquire, when the second authentication of the second user account selected by the user from among the plurality of the second user accounts is executed, the second recovery key associated with the second user account.

8. The private key recovery system (1) according to claim 6 or 7,
wherein the second recovery key of the user and the second recovery key of another user different from the user are associated with the second user account, and
wherein the second recovery key acquisition module (303) is configured to acquire the second recovery key of the user from among the second recovery key of the user and the second recovery key of the another user different from the user.

9. The private key recovery system (1) according to any one of claims 1 to 8,
wherein the second recovery key is managed by a second service selected by the user from among a plurality of the second services, and
wherein the second recovery key acquisition module (303) is configured to acquire the second recovery key managed by the second service selected by the user from among the plurality of the second services.

10. The private key recovery system (1) according to any one of claims 1 to 9, further comprising a storage determination module (103) configured to determine whether login information used to log in to the first service is stored in the user terminal (30),
wherein processing by each of the first recovery key acquisition module (302), the second recovery key acquisition module (303), and the private key recovery module (304) is executed when it is determined that the login information is not stored in the user terminal (30).

11. The private key recovery system (1) according to claim 10, further comprising a presentation module (104) configured to avoid presenting on the user terminal (30) an instruction object for the user to instruct the execution of the processing by each of the first recovery key acquisition module (302), the second recovery key acquisition module (303), and the private key recovery module (304) when it is determined that the login information is stored in the user terminal (30), and to present on the user terminal (30) the instruction object when it is determined that the login information is not stored in the user terminal (30),
wherein the processing by each of the first recovery key acquisition module (302), the second recovery key acquisition module (303), and the private key recovery module (304) is executed when an operation is performed on the instruction object.

12. The private key recovery system (1) according to claim 10 or 11, further comprising a login information recording module (105) configured to record the login information managed by the second service in the user terminal (30) when it is determined that the login information is not stored in the user terminal (30).

13. The private key recovery system (1) according to any one of claims 10 to 12, further comprising a login execution module (106) configured to execute login to the first service by simpler processing when the login information is stored in the user terminal (30) than when the login information is not stored in the user terminal (30).

14. The private key recovery system (1) according to any one of claims 10 to 13, further comprising a login execution module (106) configured to execute login to the first service based on the login information stored in the user terminal (30) and the login information managed by the first service.

15. A private key recovery method, comprising:
acquiring a first recovery key managed by a first service in which a first private key stored in a user terminal (30) of a user is used;
acquiring a second recovery key managed by a second service different from the first service; and
recovering the first private key based on the first recovery key and the second recovery key.

16. A program for causing a computer to function as:
a first recovery key acquisition module (302) configured to acquire a first recovery key managed by a first service in which a first private key stored in a user terminal (30) of a user is used;
a second recovery key acquisition module (303) configured to acquire a second recovery key managed by a second service different from the first service; and
a private key recovery module (304) configured to recover the first private key based on the first recovery key and the second recovery key.
